# EUROPÄISCHE PATENTSCHRIFT

(11) **EP 2 198 708 B1**
(45) Veröffentlichungstag und Bekanntmachung des Hinweises auf die Patenterteilung: **25.04.2012**
(21) Anmeldenummer: 09015463.4
(22) Anmeldetag: 15.12.2009
(51) Int. Cl.: A01N 25/34, A01N 25/10, A01N 25/24, A01P 7/04

(54) **Fenstersticker zum Anlocken und Töten von Insekten**
Window sticker for attracting and killing insects
Sticker de fenêtre destiné à appâter et tuer les insectes

(30) Priorität: 19.12.2008 DE 102008063807
(43) Veröffentlichungstag der Anmeldung: 23.06.2010
(73) Patentinhaber: LTS LOHMANN Therapie-Systeme AG, 56626 Andernach (DE)
(72) Erfinder: Beitzel, Else, 56626 Andernach (DE); Jaeckels, Hermann-Josef, 56170 Bendorf (DE); Kloczko, Malgorzata, Dr., 53577 Neustadt/Wied (DE); Kocherscheidt, Birgit, 56579 Bonefeld (DE); Böcker, Thomas, Dr., 42799 Leichlingen (DE)
(74) Vertreter: Siemund, Volker

(56) Entgegenhaltungen:
- WO-A1-89/12450
- WO-A1-2005/107457
- US-A1- 2007 232 497

## Beschreibung

Der Gegenstand der vorliegenden Erfindung ist ein Erzeugnis zum Anlocken und Töten von Insekten (insbesondere Fliegen), vorzugsweise in Form eines an Fensterscheiben zu klebenden Stickers. Die Erfindung bezieht sich weiterhin auf die Herstellung dieses Erzeugnisses und seine Verwendung in Haushalt, Küche, Gastronomie, Landwirtschaft und Industrie.

Erzeugnisse zum Anlocken und Töten von Insekten sind bekannt. Zu diesen sogenannten "Attract-and-Kill"-Erzeugnissen zählen auch Fliegenfenstersticker der Marke Blattanex^{®} von der Firma Bayer CropScience Deutschland GmbH.

Bei diesen Fliegenfensterstickern handelt es sich um Ködersticker zum Aufkleben auf Fensterscheiben an Plätzen, die von.der Stubenfliege gern aufgesucht werden. Angelockt durch die Form und die Kombination von Fraß- und Köderlockstoff werden die Fliegen zum Fressen animiert und verenden. Ein einzelnes Erzeugnis soll eine Wirkdauer von einer Fliegensaison haben, d.h. etwa 4 bis 7 Monate.

Nachteil dieser bekannten Fliegenfenstersticker ist es, dass sowohl Wasser (Kondens- oder Wischwasser) als auch hohe Luftfeuchtigkeit die Wirkung beeinträchtigen kann. Daher muss es vor Wasser und Feuchtigkeit geschützt werden. Versuche haben gezeigt, dass bei Verwendung in Räumen mit höherer Luftfeuchtigkeit (Küche in privatem Haushalt oder gastronomischen Betrieb, Badezimmer) die Schicht, welche die Kombination von Fraß- und/oder Köderlockstoff sowie einem insektiziden Wirkstoff enthält, zur Auflösung neigt. Dieser Effekt bewirkt ebenfalls eine Beeinträchtigung der Leistungsfähigkeit des Erzeugnisses aufgrund einer kürzeren Wirkungsdauer.

Es hat sich gezeigt, dass bei Anwendung des bekannten Erzeugnisses in einer Umgebung mit einer hohen relativen Luftfeuchtigkeit ein Zerlaufen der wirkstoffhaltigen Schicht auftritt. Dies äußert sich darin, dass sich in der zunächst äußerlich homogen erscheinenden Schicht, die die Kombination von Fraß- und/oder Köderlockstoff sowie Insektizid enthält, Wassertröpfchen bilden, die sich im Laufe der Zeit vergrößern. Aufgrund der vertikalen Anbringung an einer Fensterscheibe erfolgen erst ein Zusammenfließen der Wassertröpfchen und dann schließlich ein Zerfließen, was letztlich auch zu einer Benetzung der Fensterscheibe führt.

Dieses Zerlaufen bzw. Zerfließen ist ein aus dem Gebiet der Lackiertechnik bekannter Schaden an Beschichtungen und tritt dort auf, solange sich die Lackschicht beim Verarbeiten an senkrechten Lackiergutflächen noch im flüssigen Zustand befindet. Der recht auffällige Lackiermangel des in der Fachsprache "Ablaufen" genannten Phänomens ergibt "Gardinen" bzw. "Läufer".

Im Extremfall kann sich die die besagte Schicht, welche die Kombination von Fraß- und/oder Köderlockstoff sowie einem insektiziden Wirkstoff enthält, völlig auflösen, wodurch das Erzeugnis unwirksam wird.

Ein weiterer Nachteil bei den bekannten Fliegenfensterstickern wurde beobachtet, als verbrauchte Erzeugnisse von einer Fensterscheibe abgezogen wurden. In einigen Fällen trat ein Ablösen der die Kombination von Fraß- und/oder Köderlockstoff sowie Insektizid enthaltenden Schicht von den weiteren Bestandteilen des Fliegenfenstersticker auf. Zusätzlich konnte auch beobachtet werden, dass diese Schicht selbst in kleinere Teile zerfiel. Ein solches Zerbröseln der die Kombination von Fraß- und Köderlockstoff enthaltenden Schicht machte eine separate Entsorgung durch Auffegen oder Aufsaugen erforderlich.

WO 2005/107457 A1 offenbart wasserlösliche Folien zur Freisetzung von Wirkstoffen, insbesondere Pflanzenschutzmittel und Pflanzenwuchsstoffe. Als Materialien für diese Folien kommen anorganische und organische Stoffe in Frage, die in Wasser quellbar, vorzugsweise jedoch vollständig löslich sind. Der Anteil dieser wasserlöslichen Materialien in der wirkstoffhaltigen Folie beträgt mindestens 20 Gew. -%, vorzugsweise mindestens 45 Gew.-%. Allerdings enthalten die Folien nicht größere Mengen eines Köderstoffs.

WO 89/12450 A1 offenbart terrestrische Insektenkontrollkompositionen, die Superabsorber enthalten. Als Superabsorber sind organische Polymere auf Basis von Acrylamid und Acrylaten offenbart, die ein hohes Wasseraufnahmevermögen besitzen.

US 2007/232497A1 offenbart ein wasserlösliches Band zur kontrollierten Freisetzung eines aktiven Inhaltsstoffs. Dieses Band ist aus wasserlöslichen Polymeren aufgebaut. Das Band enthält jedoch nicht größere Anteile eines Köderstoffs.

Aufgabe der vorliegenden Erfindung ist es, einen Fensterfliegensticker zum Anlocken und Töten von Insekten zur Verfügung zu stellen, bei dem die Gefahr des Auflösen der Schicht, welche den Fraß- oder Köderlockstoff enthält, verringert oder sogar vermieden wird, insbesondere auch bei Einwirkung von Wasser im flüssigen oder gasförmigen Zustand.

Weiterhin soll das Problem der unzureichenden Haftung dieser Schicht auf den weiteren Bestandteilen des Fliegenfenstersticker, insbesondere einer Trägerschicht, gelöst werden.

Schließlich ist auch die Verbesserung des inneren Zusammenhalts ("Kohäsion") einer Schicht, die einen Fraß- und/oder Köderlockstoff enthält, eine Aufgabe der vorliegenden Erfindung.

Gelöst wird die Aufgabe durch einen Erzeugnis zum Anlocken und Töten von Insekten, welches mindestens eine wirkstoffhaltige Köderschicht (1) und eine Trägerfolie (2) aufweist. Das Erzeugnis enthält in der wirkstoffhaltigen Köderschicht (1) neben einem Köderstoff ein Supersprengmittel. Als Mittel zum Töten von Insekten enthält das Erzeugnis mindestens ein Insektizid.

In einer besonderen Ausführungsform weist das Erzeugnis eine Ankerschicht (4) auf, die zwischen der wirkstoffhaltige Köderschicht (1) und der Trägerfolie (2) angeordnet ist.

In einer weiteren Ausführungsform kann das Erzeugnis zusätzlich eine Kleberschicht (3) aufweisen.

Zur Abdeckung der Kleberschicht (3) kann das Erzeugnis bis zur Anwendung mit einem Schutzpapier (6) ausgestattet sein. Auch die wirkstoffhaltige Köderschicht (1) kann bis zur Anwendung mit einen Schutzpapier (5) ausgerüstet sein.

Schließlich kann das Erzeugnis auch dekorative Elemente aufweisen, die eine anlockende Wirkung auf Insekten ausüben bzw. verstärken.

In einer vorteilhaften Ausführungsform ist das Erzeugnis als Fenstersticker ausgestaltet. Weitere vorteilhafte Ausführungsformen sind aufstellbare Fallen und Aufhänger.

Die Aufgabe wird weiterhin gelöst durch ein Verfahren zur Herstellung eines Erzeugnis zum Anlocken und Töten von Insekten, welches mindestens eine wirkstoffhaltige Köderschicht (1) und eine Trägerfolie (2) aufweist, wobei in einem ersten Schritt mindestens ein Köderstoff und mindestens ein Insektizid gemischt werden. Bei diesem Schritt können auch mindestens ein Hilfsstoff, der als Lösemittel für das Insektizid und/oder den Köderstoff dient, mindestens eine Hilfssubstanz, mindestens ein Lockstoff und/oder mindestens ein Bitterstoff der Mischung zugegeben werden. Dieser erste Schritt kann gegebenenfalls unter Erwärmen und/oder unter Zugabe von Wasser erfolgen.

In einem zweiten Schritt wird der Mischung aus dem ersten Schritt das Supersprengmittel zugegeben.

Die so erhaltene Mischung wird nachfolgend mittels eines geeigneten Aufbringungsschrittes auf die Trägerfolie (2) aufgetragen. Es können Druckverfahren wie Flexodruck, Siebdruck, Tampondruck etc. in Frage kommen, aber auch Verfahren wie Beschichten, Extrudieren, Rakeln, Sprühen etc. in Frage kommen. Ein bevorzugtes Auftragsverfahren ist der rotative Siebdruck.

Nach dem Aufbringen der im zweiten Schritt erhaltenen Mischung auf die Trägerfolie (2) entsteht ein Laminat aus einer wirkstoffhaltigen Köderschicht (1) und einer Trägerfolie (2). Eventuell vorhandene(s) Lösungsmittel - insbesondere Wasser - wird/werden entfernt, vorzugsweise durch Trocknen und bei erhöhter Temperatur (zwischen 30°C und 90°C, vorzugsweise zwischen 45°C und 85°C). Dabei soll der Wassergehalt natürlich möglichst gering sein, mindestens kleiner als 5 Gew.-%, vorzugsweise kleiner als 2 Gew.-%.

Die wirkstoffhaltige Köderschicht (1) dieses Laminats kann nun mit einen Schutzpapier (5) abgedeckt werden.

Der zwei- oder mehrschichtige Verbund aus mindestens einer wirkstoffhaltigen Köderschicht (1) und mindestens einer Trägerfolie (2) kann durch Längs- und Querschneiden in Streifen mit passenden, vorbestimmten Dimensionen geschnitten werden.

In einer anderen Ausführungsform des Verfahrens können aus dem besagten Laminat auch runde Stanzlinge mit einem vorbestimmten Durchmesser ausgestanzt werden; aber auch andere beliebige Formen, wie oval oder den aufgedruckten Motiven (Blüten etc.) entspreche Formen. In diesen Fällen wird ein überstehender, überflüssiger Stanzrest vorzugsweise abgezogen und verworfen. Auch können Löcher in das Laminat aus mindestens einer wirkstoffhaltigen Köderschicht (1) und mindestens einer Trägerfolie (2) eingebracht werden, die später als Aufhänger dienen können. Dem Zweck als Befestigungsvorrichtung kann auch eine hakenförmige Ausformung am Außenrand des Laminats dienen.

Der zwei- oder mehrschichtige Verbund aus mindestens einer wirkstoffhaltigen Köderschicht (1) und mindestens einer Trägerfolie (2) kann auch zusätzlich mit Perforationen und/oder Falzlinien ausgerüstet werden. Das Erzeugnis kann dann durch den Anwender entlang dieser Perforationen bzw. Falzlinien geknickt werden, so dass auf diese Weise ein dreidimensionaler Hohlkörper gebildet werden kann. Derartige Knicke können somit ein sichereres Aufstellen des Erzeugnisses ermöglichen, wodurch dem Anwender eine aufstellbare Falle zur Verfügung steht.

Man erhält zwei- oder mehrschichtige Erzeugnisse, die in Siegelrandbeuteln, Schlauchbeuteln, Flachbeuteln, Einschlagpapier, Einschlagfolie, Tiefziehblistern und/oder Pappschachteln verpackt werden können.

In einer bevorzugten Ausführungsform des Herstellungsverfahrens wird eine Trägerfolie (2) verwendet, bei der vor dem Aufbringen der im zweiten Schritt erhaltenen Mischung auf einer Seite eine Ankerschicht (4) angebracht worden ist. Die im zweiten Schritt erhaltene Mischung wird dann auf diese Ankerschicht (4) aufgebracht.

In einer weiteren Ausführungsform kann auf die Seite der Trägerfolie (2), die der aufzubringenden Mischung abgewandt ist, zusätzlich eine Kleberschicht (3) aufgetragen werden. Dies geschieht vorzugsweise vor dem Aufbringen der Mischung durch Beschichten und vorzugsweise unter anschließendem Auflaminieren eines Schutzpapiers (6).

Die dekorativen Elemente des Erzeugnisses werden ebenfalls vorzugsweise schon vor der Aufbringen der Mischung auf die Trägerfolie (2) aufgebracht, vorzugsweise durch Druckverfahren.

Die Verwendung des Erzeugnisses, welches mindestens eine wirkstoffhaltige Köderschicht (1) und eine Trägerfolie (2) aufweist zum Anlocken und Töten von Insekten ist schließlich eine weitere erfindungsgemäße Lösung.

Eine Ankerschicht (4) zur Verbesserung der Haftung von unterschiedlichen Materialien - insbesondere den Bestandteilen der wirkstoffhaltigen Köderschicht (1) - auf einer Trägerfolie ist eine weitere Lösung.

Schließlich ist die Verwendung eines Supersprengmittels zur Herstellung einer einen Köderstoff - insbesondere Zucker - enthaltenden Schicht mit verbessertem innerem Zusammenhalt ein weiterer Gegenstand der vorliegenden Erfindung.

Unter der wirkstoffhaltigen Köderschicht (1) wird der Bestandteil des Erzeugnisses verstanden, der mindestens einen Köderstoff und mindestens ein Insektizid enthält.

Die wirkstoffhaltige Köderschicht (1) weist ein Flächengewicht im Bereich zwischen 10 und 250 g/m² auf, vorzugsweise im Bereich zwischen 20 und 50 g/m². Die Fläche der wirkstoffhaltigen Köderschicht (1) eines einzelnen Erzeugnisses liegt zwischen 10 und 300 cm², vorzugsweise zwischen 50 und 150 cm².

Die wirkstoffhaltigen Köderschicht (1) bildet die oberste Schicht des Erzeugnisses. Dadurch ist gewährleistet, dass ein Insekt bei der Anwendung des Erzeugnisses problemlos mit der wirkstoffhaltigen Köderschicht in Kontakt kommen kann. Gleichzeitig mit der Aufnahme des Köderstoffes erfolgt eine Aufnahme des Insektizids.

Das Insektizid ist in der wirkstoffhaltigen Köderschicht (1) in einer Konzentration zwischen 0,1 und 25 Gew.-% enthalten, vorzugsweise in einer Konzentration zwischen 0,5 und 10 Gew.-%.

Während der Lagerung des Erzeugnisses kann die wirkstoffhaltige Köderschicht mit einem Schutzpapier (5) abgedeckt sein, das kurz vor der Anwendung des Erzeugnisses von der wirkstoffhaltigen Köderschicht abgezogen wird.

Die wirkstoffhaltige Köderschicht (1) kann in Form einer durchgehenden, d.h. kontinuierlichen Schicht vorliegen, wobei sie vorzugsweise eine annähernd konstante Dicke aufweist.

Die wirkstoffhaltige Köderschicht (1) kann aber auch in Form einer nicht durchgehenden Schicht vorliegen. In diesem diskontinuierlichen Fall kann die wirkstoffhaltige Köderschicht beispielsweise in Form von nicht vollständig miteinander in Verbindung stehenden Punkten und/oder Streifen vorliegen. Derartige Formen der wirkstoffhaltigen Köderschicht (1) sind durch Anpassung der jeweiligen Aufbringungsverfahren zu erzielen. Dabei können entsprechende Schablonen auf die Trägerfolie gelegt werden, um Bereiche auf der Trägerfolie von einem Auftrag der Mischung aus mindestens einem Köderstoff, mindestens einem Insektizid und dem Supersprengmittel zu schützen.

Die Fläche der wirkstoffhaltigen Köderschicht kann in besonderen Ausführungsformen kleiner sein als die Fläche der Trägerfolie (2), was leicht durch ein nicht-vollflächiges Beschichten der Trägerfolie (2) erreicht wird.

Die wirkstoffhaltige Köderschicht (1) kann auch als ein fester Schaum vorliegen, und zwar insbesondere als Hartschaumstoff, als halbharter Schaumstoff oder als Weichschaumstoff. In einer besonderen Ausführungsform handelt es sich um einen elastischen Schaum. Besonders bevorzugt ist die Ausführungsform der wirkstoffhaltigen Köderschicht (1) als Weichschaumstoff, die bei Druckbelastung (Druckspannung bei 10 % Stauchung nach DIN 53421) einen Verformungswiderstand von kleiner oder gleich15 kPa aufweist..Zur Herstellung einer wirkstoffhaltigen Köderschicht (1) in Form eines festen Schaums werden Basispolymere wie Formaldehyd-Harze, Polyisocyanurate (PIR), Polystyrol, Polyurethane (PUR) und Polyvinylchlorid verwendet.

Grundsätzlich können das Insektizid einerseits und der Köderstoff mit dem Supersprengmittel andererseits auch in zwei separaten, vorzugsweise benachbarten Schichten in dem Erzeugnis enthalten sein. Eine solche Ausführungsform erfordert jedoch die Bereitstellung von zwei separaten Ausgangsmaterialien, die in zwei getrennten Arbeitsschritten auf die Trägerfolie (2) aufgebracht werden müssen. Auch wenn sich dadurch keine grundsätzlichen technischen Probleme ergeben, ist eine solche Ausführungsform aufgrund ökonomischer Überlegungen nicht bevorzugt.

Das Erzeugnis enthält eine Trägerfolie (2), die unterhalb der mindestens einen wirkstoffhaltigen Köderschicht (1) angeordnet ist. Bei der Trägerfolie (2) kann es sich um Papier, Pappe oder Metallfolie handeln, bevorzugt ist jedoch eine - vorzugsweise transparente - Folie aus einem Kunststoffmaterial. Es kommen Solo- oder Verbundfolien in Frage, die eine Dicke zwischen 5 und 150 µm, vorzugsweise zwischen 25 und 75 µm aufweisen.

Die Trägerfolie (2) besitzt die Funktion, dem Erzeugnis die Handhabbarkeit zu verleihen und während des Herstellungsprozesses das Auftragen von fließfähigen Komponenten zu ermöglichen. Die Fläche der Trägerfolie (2) ist vorzugsweise identisch mit der Fläche der wirkstoffhaltigen Köderschicht (1).

In einer besonderen Ausführungsform kann die Fläche der Trägerfolie (2) jedoch auch größer sein als die Fläche der wirkstoffhaltigen Köderschicht (1) und/oder der Kleberschicht (3), um eine Anfasshilfe für das leichte Abziehen eines verbrauchten Erzeugnisses (insbesondere in der Form eines Fensterstickers) vom Anwendungsort zu bieten.

Als geeignete Materialien für die Trägerfolie (2) kommen Polyethylen (PE), Polyethylenterephthalat (PET), Polyvinylchlorid (PVC), Polyester, Polypropylen (PP), Cellophan, Cellulose, Polyvinylidenchlorid, Polystyrol, Karton, Kartonverbund, PET/Karton/PET-Verbund und andere Rohmaterialien in Frage. Bevorzugt sind Polyethylen (PE), Polypropylen und Polyethylenterephthalat (PET).

Das Erzeugnis kann eine Kleberschicht (3) enthalten, die eine Haftung auf einer festen Oberfläche bewirkt. Die Kleberschicht enthält daher vorzugsweise einen Haftkleber. Unter "haftklebend" wird verstanden, dass die Kleberschicht im trockenen Zustand bei Raumtemperatur nach leichtem Andrücken auf einer Vielzahl von Oberflächen haftet und bei Bedarf wieder rückstandsfrei davon abgezogen werden kann.

Haftkleber sind dem Fachmann bekannt. Hierzu zählen Synthese- und Naturkautschuk, Butylkautschuk, Styrol-Butadien-Copolymere, Ethylen-Vinylacetat-Copolymere, Acrylnitril-Copolymere, Polychloropren, Polyisobutylen, Polyvinylether, SBS-Blockpolymere, SIS-Blockpolymere, Polyacrylate, Polyester, Polyurethane und Polysiloxane. Zur Erzielung der erforderlichen Haftklebeeigenschaften können diesen Grundstoffen noch Materialien wie Harze, Weichmacher, Füllstoffe und Stabilisatoren zugegeben werden.

Besonders bevorzugt als Haftkleber für die Kleberschicht sind Polyacrylate, Polyisobutylene und Ethylen-Vinylacetat-Copolymere.

Die bevorzugten Haftkleber weisen eine Glasübergangstemperatur im Bereich von -20°C bis -70°C auf.

Die Kleberschicht (3) weist eine Schichtdicke im Bereich zwischen 10 µm und 150 µm auf, vorzugsweise im Bereich zwischen 20 µm und 70 µm.

Die Fläche der Haftkleberschicht entspricht vorzugsweise der Fläche, die auch die wirkstoffhaltige Köderschicht (1) oder die Trägerfolie (2) besitzt. Die Fläche kann aber auch wesentlich kleiner sein und beispielsweise in Form eines schmalen Streifens oder einzelner Punkte ausgebildet sein.

Die Kleberschicht bildet die unterste Schicht des Erzeugnisses bei seiner Anwendung. Während der Lagerung ist diese Kleberschicht vorzugsweise mit einem Schutzpapier (6) abgedeckt, das kurz vor der Anwendung des Erzeugnisses von dieser Schicht abgezogen wird.

Die Schälwiderstand der Kleberschicht bei einer 180°-Schälung liegt vorzugsweise im Bereich von kleiner als 10 N / 25 mm, besonders bevorzugt im Bereich zwischen 1 und 6 N (nach DIN EN 1464).

Als geeignete feste Oberflächen kommen insbesondere Fensterscheiben (aus Glas oder Kunststoff), aber auch Kacheln, geflieste Wände, Möbel (aus Kunststoff oder Holz), Fensterrahmen, Tapeten und dergleichen in Frage. Als aufstellbare Falle kann das Erzeugnis auf jede beliebige Unterlage - insbesondere in geschlossenen Räumen - aufgestellt werden.

Als Köderstoff kommen hauptsächlich Zucker in Frage. Hierzu zählen: Monosaccharide, Disaccharide sowie Mischungen, die Mono- und/oder Disaccharide enthalten. Auch Zuckeralkohole (Alditole) zählen zu den geeigneten Köderstoffen, insbesondere Xylitol, D-Glucitol ("Sorbitol"), D-Mannitol, Maltitol, Isomalt und Lactilol.

Geeignete Monosaccharide sind L-Arabinose, D-Xylose, D-Ribulose, D-Glucose ("Traubenzucker") D-Mannose, D-Galaktose, D-Glucuronsäure, (auch als Glucuronat oder verestert), D-Galacturonsäure (auch als Galacturonat oder verestert), N-Acetyl-D-glucosamin, D-Glucosamin, N-Acetyl-D-galactosamin, D-Fucose, L-Fucose, L-Rhamnose, D-Chinovose und D-Fructose ("Fruchtzucker").

Bevorzugte Monosaccharide sind D-Glucose und D-Fructose.

Geeignete Disaccharide sind Maltose ("Malzzucker"), Cellobiose, Isomaltose, Isomaltulose, Gentiobiose, Trehalose, Saccharose ("Rohrzucker" oder "Rübenzucker"), Lactose ("Milchzucker") und Laminaribiose.

Bevorzugte Disaccharide sind Lactose, Maltose und Saccharose.

Bevorzugter Zuckeralkohol ist D-Glucitol.

Zu den geeigneten Mischungen, die Mono- und/oder Disaccharide enthalten zählen Ahornsaft, Ahomsirup, Backhonig, Blütenhonig, Glucosesirup, Honig, Honigtauhonig, Industriehonig, Invertzucker, Invertzuckersirup, Isoglucose, Isomeratzucker, Maissirup, Maltosesirup, Rübensirup, Stärkesirup und Zuckerrübensirup.

Auch Honig sowie Waldhonig (den die Bienen nicht aus Nektar, sondern aus Honigtau gewinnen, wobei als Pflanzen in Wäldern wachsende Laub- und Nadelbäume wie Ahorn (*Acer pseudoplatanus*), Feldahorn (*Acer campestre*), Spitzahorn (*Acer platanoides*), Eiche (*Quercus petraea*), Stieleiche (*Quercus robur*), Fichte (*Picea abies*), Kiefer (*Pinus sylvestris*), Lärche (*Latrix decidua*) und Tanne (*Abies alba*) in Frage kommen) zählen zu den geeigneten Mischungen.

Bevorzugte Mischungen sind Glucosesirup und Maltosesirup.

Die Konzentration des Köderstoffs in der wirkstoffhaltigen Köderschicht (1) sollte so hoch wie möglich sein, um die Lockwirkung des Erzeugnisses zu maximieren. Daher kann die Konzentration des Köderstoffs bis zu 99,5 Gew.-% betragen, vorzugsweise liegt sie zwischen 50 und 95 Gew.-%, besonders bevorzugt zwischen 70 und 90 Gew.-%. Als eine zweckmäßige Untergrenze kann man eine Konzentration von 30 Gew.-% Köderstoff in der wirkstoffhaltigen Köderschicht (1) ansehen.

Als Insektizid kommen natürliche und synthetische Insektizide in Frage. Zu den natürlichen Insektiziden zählt Pyrethrum, ein Extrakt aus getrockneten Chrysanthemenblüten, das Pyrethrine, Cinerine und Jasmoline enthält. Zu den synthetischen Insektiziden zählen insbesondere organische Insektizide aus den folgenden Verbindungsklassen: Organophosphor-Insektizide (z.B. Parathion, Dimethoat), Carbamate (z.B. Carbaryl, Carbofuran, Propoxur), Pyrethroide (z.B. Allethrin, Cyfluthrin, Permethrin), Phenylpyrazole (z.B. Fipronil) und Neonicotinoide (z.B. Acetamiprid, Imidacloprid, Clothianidin, Thiacloprid und Thiametoxam).

Da die Verwendung dieser Stoffe im Haus- und Kleingartenbereich eine behördliche Zulassung voraussetzt, sind nur solche Insektizide geeignet, die auch die Zulassungserfordernisse (d.h. den gesetzlichen Regelungen aus diesen Bereichen: dem Pflanzenschutzmittelgesetz, dem Chemikaliengesetz, dem Biozidgesetz etc.) erfüllen. Die hier eingesetzten Insektizide wirken hauptsächlich über das Nervensystem oder die Atmungskette.

Bevorzugt sind solche Insektizide, die beim Insekt einen schnellen Tod bewirken.

Konkret seien folgende natürliche oder synthetische Insektizide als geeignet genannt: Abamectin, Acetamiprid, alpha-Cypermethrin, Azadirachtin (Neem), Azamethiphos, beta-Cyfluthrin, Bifenazate, Bifenthrin, Buprofezin, Chlorantraniliprol, Chlorfenapyr, Chlorpyrifos, Clothianidin, Deltamethrin, Diflubenzuron, Dinotefuran, Dimethoat, Esfenvalerat, Etofenprox, Fenoxycarb, Fenpyroximat, Flonicamid, Flubendiamid, Flufenoxuron, Imidacloprid, Imiprothrin, Indoxacarb, Kali-Seife, Kieselgur, lambda-Cyhalothrin, Lithiumperfluoroctansulfonat, Magnesiumphosphid, Metaflumizone, Methoxyfenozide, Metofluthrin, Milbemectin, Mineralöle, n-Methylneodecanamid, Nicarbazin, Novaluron, Pirimicarb, Pirimiphos-methyl, Pymetrozin, Pyrethrine, Pyridalyl, Rapsöl, Spinosad, Spirodiclofen, Sulfurylfluorid, Tebufenozid, Tefluthrin, Thiacloprid, Thiamethoxam und zeta-Cypermethrin.

In Frage kommen auch Biopestizide wie Bacillus thuringiensis subspecies und mexikanischer Cydia pomonella Granulovirus.

Auch Kombinationen von mindestens zwei Insektiziden sind geeignet, wie beispielsweise Abamectin + Thiamethoxam, Azamethiphos + Fipronil, beta-Cyfluthrin + Clothianidin, beta-Cyfluthrin + Imidacloprid, Cyfluthrin + Codlemone, Fludioxonil + Metalaxyl-M + Thiamethoxam, Fuberidazol + Imazalil + Triadimenol + Imidacloprid, Methiocarb + Imidacloprid, Pencycuron + Imidacloprid, Pyrethrine + Abamectin, Pyrethrine + Rapsöl sowie Tefluthrin + Imidacloprid.

Besonders bevorzugt als Insektizid sind Acetamiprid, Azamethiphos, Ethofenprox, Fipronil, Imidacloprid, die Pyrethroide und Thiacloprid sowie die Kombination von Azamethiphos und Fipronil.

Die wirkstoffhaltige Köderschicht (1) kann auch mindestens einen Hilfsstoff enthalten, der als Lösemittel für das Insektizid und/oder den Köderstoff dient. Als Lösemittel können unter anderem aliphatische Kohlenwasserstoffe, aromatische Kohlenwasserstoffe, hydroaromatische Kohlenwasserstoffe, Terpenkohlenwasserstoffe, Alkohole, Ester, Ether, Glykolether, Ketone, Chlorkohlenwasserstoffe, Aldehyde, Acetale und aliphatische gesättigte Monocarbonsäuren dienen.

Beispielhaft seien erwähnt: 1- Octanol, 1-Decanol, Aceton, Acetophenon, Benzylalkohol, Butyrolacton, Hexyllaurat, PEG-60 Corn Glycerides mit Handelsnamen Crovol M 70, Citrus-Terpene, Dimethylformamid, Dimethylsulfoxid, Essigsäure, Ethanol, Ethylacetat, Ethylenglykol, Eucalyptol, Glycerin, Isopropylmyristat, Methylethylketon, Morpholin, Lavendel/Citronellagemisch, Myrcene, Neodekansäure, N-Methyl-2-pyrrolidon (NMP), N-Octyl-pyrrolidon (NOP), Ölsäure, PEG 400, PLURONIC PE 4300, Proglyde DMM, verdünnte Salzsäure, Tributylphosphat, Triton X-100 und Wasser. Besonders bevorzugt sind Methylpyrrolidon (NMP), N-Octyl-pyrrolidon (NOP) und Butyrolacton.

Als geeignete Lösemittel für das Insektizid können auch natürliche oder synthetische Polymere in Frage kommen.

Die wirkstoffhaltige Köderschicht (1) kann auch mindestens eine der folgenden Hilfssubstanzen enthalten: Bindemittel, UV-Absorber, pH-Puffer, Salze, Alterungsschutzmittel (Antioxidantien und Antiozonantien), Füllstoffe, Weichmacher, Geruchsverbesserungsmittel, Sauerstoff-Entferner, Antistatika, Stabilisatoren, Trennmittel, Gleitmittel, Flammschutzmittel, Mikrobizide, Viskositätsverbesserer, Detergenzien, Dispergiermittel, optische Aufheller, Farbstoffe, Geschmacksstoffe.

Die wirkstoffhaltige Köderschicht (1) kann auch mindestens einen Lockstoff aus der Gruppe der Insektenpheromone enthalten. Hierzu zählen die von Insekten selbst produzierten Sexualpheromone und Aggregationspheromone wie Anastrephin, Bombykol, Brevicomin, Chalcogran, Cucujolide, Disparlur, Dominicalure, Epoxypolyene, Ferrulacton, Frontalin, Grandisol, Hepialon, Ipsdienol, Lardolure, Lineatin, Matsuon, Muscalur, Multistriatin, Olean, Periplanone, Pityol, Quadrilur, Rhynchophorol, Serricornin, Stegobinon, Sulcatol, Verbenol und andere. Derartige Insektenpheromone liegen - sofern sie in der wirkstoffhaltigen Köderschicht (1) enthalten sind - in einer Konzentration von 0,01 bis 0,2 Gew.-%, vorzugsweise von 0,05 bis 0,1 Gew.-% vor.

In einer besonders bevorzugten Ausführungsform enthält die wirkstoffhaltige Köderschicht (1) mindestens einen Bitterstoff, der Haustiere und/oder Kleinkinder von einem unbeabsichtigten Verzehr abhalten soll.

Es hat sich herausgestellt, dass die Verwendung eines Supersprengmittels die Gefahr des Auflösens des Bestandteils, welcher den Köderstoff enthält, verringert oder sogar ausschließt. Zu diesem Zweck kann das Supersprengmittel in einer separaten, zur wirkstoffhaltigen Köderschicht (1) benachbarten Schicht enthalten sein. Vorzugsweise ist das Supersprengmittel aber in der wirkstoffhaltigen Köderschicht (1) enthalten, damit eine intensivere Durchmischung von Köderstoff und Supersprengmittel gegeben ist.

Als geeignete Supersprengmittel kommen Stoffe in Frage, die in der Technik der Tablettenherstellung als Zerfallhilfsmittel eingesetzt werden. Es sind Hilfsstoffe, die für den raschen Zerfall von Tabletten in Wasser oder Magensaft und für die Freisetzung der Pharmaka in resorbierbarer Form sorgen. Dabei kommen solche Substanzen in Frage, die ein großes Adsorptionsvermögen für Wasser besitzen, beispielsweise Stärke, Cellulose-Derivate, Alginate, Dextrane, quervernetztes Polyvinylpyrrolidon und andere.

Dass die Verwendung eines solchen Supersprengmittels die physikalische Stabilität und Unversehrtheit der wirkstoffhaltigen Köderschicht (1) trotz Feuchtigkeitseinwirkung über einen längeren Zeitraum gewährleistet, ist umso erstaunlicher, da diese Stoffe gerade für einen schnellen Zerfall von Tabletten verwendet werden.

Das Supersprengmittel ist - wenn es sich in der wirkstoffhaltigen Köderschicht (1) befindet - darin in einer Konzentration von 0,1 bis 10 Gew.-% enthalten, vorzugsweise in einer Konzentration von 0,5 bis 5 Gew.-%. In einer besonders bevorzugten Ausführungsform enthält die wirkstoffhaltige Köderschicht (1) das Supersprengmittel in einer Konzentration von 1 bis 2 Gew.-%. Vorzugsweise werden die Supersprengmittel in Form von festen Partikeln eingesetzt, die eine Partikelgröße von kleiner als 65 µm aufweisen, vorzugsweise zwischen 25 und 35 µm.

In einer bevorzugten Ausführungsform wird als Supersprengmittel Carboxymethylcellulose eingesetzt. Es handelt sich dabei insbesondere um das Natriumsalz einer vernetzten, partiell O-carboxymethylierten Cellulose mit der CAS-Reg.-Nr. 9004-32-4. Synonyme dieser unter zahlreichen Markennamen erhältlichen Substanz sind beispielsweise Croscarmellose, Primellose oder "Cellulose, carboxymethyl ether, sodium salt, low-substituted". (US Drug Master File 9662)

In einer anderen bevorzugten Ausführungsform wird als Supersprengmittel Carboxymethylstärke eingesetzt. Es handelt sich dabei insbesondere um das Natriumsalz einer vernetzten, partiell O-carboxymethylierten Kartoffel- oder Maisstärke. Der Natriumgehalt kann zwischen 2,0 und 5,0% liegen. Die Substanz besitzt folgende Struktur:

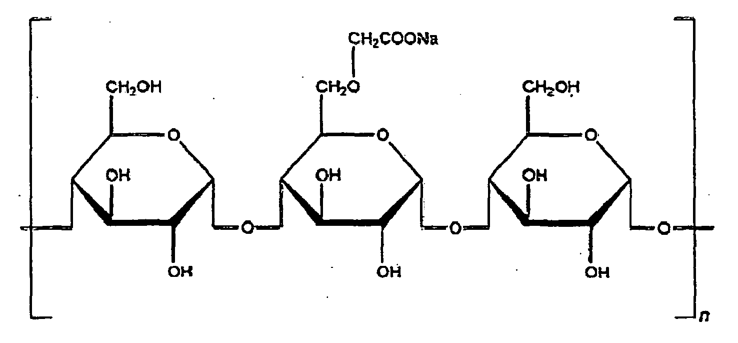

Es handelt sich dabei um ein Stärke-Derivat mit der CAS-Nr. 9063-38-1. Das Molekulargewicht dieser Substanz liegt typischerweise zwischen 500.000 und 11.000.000. Die Substanz wird in Form fester Partikel mit einem Durchmesser zwischen 10 und 100 µm eingesetzt. Synonyme dieser Substanz sind beispielsweise Primojel oder "Starch, carboxymethyl ether, monosodium salt". (US Drug Master File 3015)

Die genannten Supersprengmittel können auch allgemein zur Verringerung der Gefahr des Auflösens einer zuckerhaltigen Schicht in einer Umgebung mit erhöhter Luftfeuchtigkeit verwendet werden, ohne dass diese Schicht ein Insektizid enthalten muss. Eine solche zuckerhaltige Schicht (beispielsweise die Zuckerglasur eines Kuchens oder von Kleingebäck) kann einen der offenbarten Zucker in einer Konzentration bis zu 99,5 Gew.-% enthalten, vorzugsweise zwischen 50 und 95 Gew.-%, und ein Supersprengmittel in einer Konzentration von 0,1 bis 10 Gew.-%, vorzugsweise 0,5 bis 2 Gew.-%. Eine solche - insektizidfreie - zuckerhaltige Schicht kann auch ein größeres Flächengewicht als die wirkstoffhaltige Köderschicht (1) aufweisen. beispielsweise 50 bis 1.500 g/m².

Die wirkstoffhaltigen Köderschicht (1) kann in einer besonderen Ausführungsform mindestens ein Tensid enthalten. Tenside sind bekannt als grenzflächenaktive Stoffe, die ein Benetzen und Umnetzen einer Oberfläche bewirken.

Als Tenside werden anionische, kationische, nichtionische oder amphotere Detergenzien eingesetzt.

Geeignete anionische Detergenzien sind sulfonierte und sulfatierte Alkyl-, Arylalkyl- und Alkylarylverbindungen, Alkylsuccinate, Alkylsulfosuccinate und N-Alkoylsarcosinate. Bevorzugt sind Natrium-, Magnesium-, Ammonium- und die Mono-, Di- und Triethanolaminsalze von Alkyl- und Arylalkylsulfaten sowie die entsprechenden Salze von Alkylarylsulfonaten. Die Alkylgruppen der Detergenzien haben im allgemeinen 12 bis 21 Kohlenstoffatome und können ungesättigt, vorzugsweise aber gesättigt sein. Auch Alkylethersulfate, die 1 bis 10 Ethylenoxid- oder Propylenoxideinheiten pro Molekül enthalten, können eingesetzt werden.

Typische geeignete anionische Detergenzien, die erfindungsgemäß eingesetzt werden können, sind Natriumlaurylsulfat, Natriumlaurylethersulfat, Ammoniumlaurylsulfat, Triethanolaminlaurylsulfat, Natrium-(C₁₄₋₁₆)-Olefinsulfonate, Natriummyristylethersulfat, Ammoniumlaurylethersulfat, Dinatriumlaurylsulfosuccinat, Ammoniumlaurylsulfosuccinat, Natriumdodecylbenzylsulfonat, Natriumcocoylisothionat und Natrium-N-Lauroylsarcosinat. Ein besonders bevorzugtes Tensid in dem erfindungsgemäßen Erzeugnis ist Natrium-Cocoamphoacetat.

Als kationische Detergenzien kommen monoquaternäre oder bisquaternäre Ammoniumverbindungen in Frage, die mindestens einen langkettigen aliphatischen Rest mit 10 bis 26 Kohlenstoffatomen tragen. Dieser langkettige aliphatische Rest kann eine Esterbindung oder eine Amidbindung enthalten. Bevorzugt ist Hexadecylmethylammoniumchlorid.

Als nicht-ionische Detergenzien können Kondensationsprodukte aus Ethylenoxid oder Propylenoxid mit einem langkettigen Alkohol, einem langkettigen Amin oder einer langkettigen Carbonsäure eingesetzt werden, sofern sie nicht flüssig sind. Dabei umfasst die aliphatische Kohlenstoffkette in der Regel 8 bis 20 Kohlenstoffatome und kann mit 5 bis 20 Ethylenoxid- oder Propylenoxideinheiten kondensiert sein. Als nicht-ionische Detergenzien können auch Alkylpolyglykoside mit 8 bis 14 Kohlenstoffatomen in der Alkylkette eingesetzt werden.

Als amphotere Detergenzien werden vor allem Betaine eingesetzt, die lange Alkylgruppen tragen. Hierzu gehören das Cocosdimethyl-carboxymethylbetain, das Lauryldimethylcarboxymethylbetain, das Lauryldimethyl-a-carboxyethylbetain, das Cetyldimethyl-carboxymethylbetain, aber auch Sulfobetaine wie das Cocosdimethyl-sulfodimethylbetain und Amido- und Amidosulfobetaine. Die Carboxybetaine und die Amidobetaine werden besonders bevorzugt. Spezielle Beispiele hierfür sind das Cocosamidopropylbetain, das Laurylamidopropylbetain, das Myristylamidopropylbetain und Mischungen der genannten Verbindungen.

Das mindestens eine Tensid ist in der wirkstoffhaltigen Köderschicht in einer Menge von bis zu 5 Gew.-% enthalten, vorzugsweise bis zu 2 Gew.-%. In einer besonders bevorzugten Ausführungsform ist das Tensid in einer Menge zwischen 0,1 und 0,5 Gew.-% in der wirkstoffhaltigen Köderschicht (1) enthalten.

Das Schutzpapier (5) dient während der Lagerung des Erzeugnisses dem Schutz der wirkstoffhaltigen Köderschicht (1).

Das Schutzpapier (6) dient während der Lagerung des Erzeugnisses dem Schutz der Kleberschicht (3).

Geeignete Schutzpapiere können aus einer Metallfolie, einer Kunststofffolie, Papier oder einem Verbundwerkstoff bestehen. Die Schutzpapiere (5) bzw. (6) sind vorzugsweise auf der der zu schützenden Schicht zugewandten Seite antihaftend ausgerüstet, beispielsweise durch Beschichtung mit Silikon. Die Schutzpapiere können auf der der zu schützenden Schicht abgewandten Seite bedruckt sein.

Das Erzeugnis kann auch eine Ankerschicht (4) enthalten, die sich zwischen der Trägerfolie (2) und der wirkstoffhaltigen Köderschicht (1) befindet, und die eine bessere Befestigung der Bestandteile der wirkstoffhaltigen Köderschicht (1) auf der Trägerfolie (2) bewirkt.

Die Dicke der Ankerschicht (4) kann bis zu 25 µm betragen, wobei eine Dicke von 3 bis 10 µm bevorzugt ist. Die Ankerschicht (4) kann eine annähernd konstante Dicke besitzen. In einer bevorzugten Ausführungsform besitzt die Ankerschicht (4) jedoch keine konstante Dicke, was auf das Vorhandensein regelmäßiger oder unregelmäßiger Aussparungen ("Vertiefungen") zurückgeführt werden kann. In einer besonders bevorzugten Ausführungsform besitzen diese Aussparungen in der Ankerschicht eine regelmäßige geometrische Form, beispielsweise rund, oval, rautenförmig, rechteckig oder quadratisch.

In einer bevorzugten Ausführungsform besitzt die Ankerschicht (4) regelmäßig angeordnete quadratische Aussparungen von 0,5 bis 3 mm, vorzugsweise 0,8 bis 2 mm und besonders bevorzugt 1 mm Kantenlänge, so dass sie insgesamt die Form eines Gitters besitzt. Dabei sind die Gitterstege 5 bis 25, vorzugsweise 8 bis 15 und besonders bevorzugt 10 µm hoch. Sofern derartige Aussparungen in der Ankerschicht (4) vorhanden sind, befinden sie sich vorzugsweise auf der Seite dieser Schicht, die an die wirkstoffhaltige Köderschicht (1) grenzt.

Als Materialien für die Ankerschicht (4) kommen synthetische Polymere in Frage. Bevorzugt sind solche Polymere, welche die Grundlage für wasserbasierende Lacke sind, wie beispielsweise Dispersionen auf der Basis von Styrolacrylaten (z.B. Luhydran^{®} S 937 T), Polyvinylacetat, Phenolharzen, PVC, Polyvinylether, Polyvinylpropionat, PVP-Homopolymerisaten, PVP-Copolymerisaten, Poly(Meth)Acrylaten, Polystyrol, Kohlenwasserstoffharzen, Polyurethan oder Polyurethan-Hybriden.

Die Ankerschicht ist vorzugsweise kongruent mit der wirkstoffhaltigen Köderschicht (1). Sie wird insbesondere dann verwendet, wenn die wirkstoffhaltigen Köderschicht (1) nur einen unvollständigen, inneren Zusammenhalt aufweist.

Die Ankerschicht kann durch Walzenauftrag, Streichen, Gießen, Sprühen oder - vorzugsweise - durch ein Druckverfahren hergestellt werden. Hier kommt insbesondere der rotative Siebdruck in Frage. Im Fall einer Ankerschicht mit Aussparungen müssen bei den erstgenannten Techniken entsprechend geformte Schablonen auf die Trägerfolie (2) gelegt werden, so dass die als Aussparung vorgesehenen Bereiche nicht von dem als Material für die Ankerschicht verwendetem Polymer benetzt werden. Bei den Druckverfahren können ebensolche Druckwalzen verwendet werden. Es ist aber auch möglich, Druckwalzen mit Erhebungen zu verwenden, so dass nur die zu bedruckenden Bereiche der Trägerfolie (2) von dem als Material für die Ankerschicht verwendetem Polymer benetzt werden.

Als dekorative Elemente kommen beispielsweise Motive von Blüten, Hologramme, Objekte mit Schatten, die eine Dreidimensionalität suggerieren, und spezifische Signalfarben in Frage.

Diese als optischer Reiz für das Zielinsekt fungierenden Motive können vorzugsweise auf die Trägerfolie (2) aufgedruckt werden. Auch eine Färbung der transparenten Trägerfolie in einer Signal- oder Lockfarbe (gelb, rot etc.) kann diesem Zweck dienen.

Unter Insekten versteht man im Sinne der vorliegenden Beschreibung insbesondere Hygieneschädlinge wie Ameisen (Formicidae), Bremsen (Tabanidae), Fliegen (Brachycera), Mücken (Culicidae), Schaben (Blattaria), Silberfischchen (Lepismatidae), Wanzen (Cimicidae) und Wespen (Vespinae), die teilweise sogar Krankheiten auf Mensch und Tier übertragen können.

Besonders bevorzugte "Zielinsekten" sind die Stubenfliege (*Musca domestica*) und die Fruchtfliege (*Drosophila melanogaster*).

Ein einzelnes Erzeugnis kann eine Fläche zwischen 10 und 300 cm² besitzen, vorzugsweise zwischen 50 und 150 cm². Ein einzelnes Erzeugnis kann zwischen 2 bis 50 mg eines Insektizids enthalten. Das Erzeugnis kann rechteckig, streifenförmig oval oder rund sein, wobei in der Form eines Fensterstickers die runde Form bevorzugt ist.

Die Anwendungsdauer eines einzelnen Erzeugnisses kann bis zu 7 Monate betragen, wobei die Anwendung in einer Umgebung mit einer relativen Luftfeuchtigkeit von 40 bis 100%, vorzugsweise mindestens 80% erfolgen kann, ohne dass ein Zerlaufen ("Ablaufen") der wirkstoffhaltigen Köderschicht (1) beobachtet wird.

Die Erfindung betrifft auch ein Verfahren zur Herstellung eines Erzeugnisses enthaltend eine wirkstoffhaltige Köderschicht (1) und eine Trägerfolie (2), wobei in einem ersten Schritt mindestens ein Köderstoff, mindestens ein Insektizid und gegebenenfalls zusätzlich mindestens eine Substanz aus der Gruppe der Hilfsstoffe, die als Lösemittel für das Insektizid und/oder den Köderstoff dienen, der Hilfssubstanzen, der Lockstoffe, der Tenside und der Bitterstoffe gemischt werden, in einem zweiten Schritt dieser Mischung ein Supersprengmittel hinzugefügt wird und die so erhaltene Mischung anschließend auf die Trägerfolie (2) aufgetragen wird, wobei gegebenenfalls vor dem Auftragen der im zweiten Schritt erhaltenen Mischung auf die Trägerfolie (2) eine Ankerschicht (4) auf diese Seite der Trägerfolie angebracht wird.

Die Erfindung betrifft auch die Verwendung eines Supersprengmittels aus der Gruppe umfassend Carboxymethylcellulose und/oder Carboxymethylstärke zur Verringerung der Gefahr des Auflösens einer zuckerhaltigen Schichte in einer Umgebung mit erhöhter Luftfeuchtigkeit, wobei die Schicht mindestens 50 Gew.-% eines Zuckers enthält und vorzugsweise ein Flächengewicht von 50 bis 1.500 g/m² aufweist.

Schließlich betrifft die Erfindung auch ein Verfahren zum Anlocken und Töten von Insekten, insbesondere Ameisen (Formicidae), Bremsen (Tabanidae), Fliegen (Brachycera), Mücken (Culicidae), Schaben (Blattaria), Silberfischchen (Lepismatidae), Wanzen (Cimicidae) und Wespen (Vespinae), wobei ein Erzeugnis, welches eine wirkstoffhaltige Köderschicht (1) und eine Trägerfolie (2) aufweist, diesen Insekten in einer Weise angeboten wird, welche die Insekten befähigt, den Wirkstoff - vorzugsweise ein Insektizid - gleichzeitig mit dem Köderstoff aufzunehmen.

Die nachfolgenden Beispiele dienen der Verdeutlichung der Herstellung des Erzeugnisses.

### Beispiel 1:

844,49 g Glukosesirup werden in einen beheizbaren Behälter eingewogen. Eine Wirkstofflösung aus 36,5 g Acetamiprid und 73 g N-Octyl-Pyrrolidon wird unter rühren in das Glukosesirup geben und ca. 30 Minuten lang bei 40°C verrührt. Danach werden nacheinander 1,7 g einer 5%-igen wässrigen Bitrex-Lösung, 2,5 g Natrium-Laurylsulfat und 41,5 g Primellose zugegeben und die Mischung so lange gerührt, bis eine milchige homogene Suspension entstanden ist.

Diese Masse wird anschließend mittels einer Siebdruckmaschine auf eine mit Haftkleber ausgerüsteter und mit Blumen bedruckter 50 µm -Polyethylenterephthalat-Trägerfolie (2) im Druckmotivbereich, aufgedruckt. Nach dem Entfernen des Wassers durch Trocknen bei einer erhöhten Temperatur besitzt die nun entstandene wirkstoffhaltige Köderschicht (1) ein Flächengewicht von 20 g/m².

Dieser Verbund wird so gestanzt, dass runde Stanzlinge mit einem Sonnenblumenmotiv und einem Durchmesser von ca. 10 cm entstehen. Auf dem so erhaltenen Laminat wird ein als Schutzschicht (5) dienendes silikonisiertes Papier aufgelegt und der gesamte Verbund zu einer Karte der Größe 100 x 220 mm geschnitten. Diese Einzelkarte mit zwei Erzeugnissen in Form von Sonnenblumenstickern wird in Siegelrandbeutel verpackt.

### Beispiel 2:

888,5 g Glukosesirup werden in einen beheizbaren Behälter eingewogen. Nacheinander werden 66,3 g Etofenprox, 1,6 g einer 5%-igen wässrigen Bitrex-Lösung, 2,5 g Dehyton und 41,0 g Primojel unter Rühren in den Glukosesirup gegeben und bei 40°C verrührt. Die Mischung wird so lange gerührt, bis eine homogen erscheinende, ölige Suspension entstanden ist.

Diese Masse wird anschließend auf eine mit Haftkleber ausgerüsteten 100 µm-Polypropylen-Trägerfolie (2) ausgestrichen. Nach dem Entfernen des Wassers durch Trocknen bei erhöhter Temperatur besitzt die nun entstandene wirkstoffhaltige Köderschicht (1) ein Flächengewicht von 50 g/m².

Dieser Verbund wird in Streifen gestanzt, so dass 6 Streifen der Größe 10 mm x 200 mm auf einer Fläche von 60 x 200 mm entstehen. Auf dem so erhaltenen Streifen-Laminat wird ein als Schutzschicht (5) dienendes silikonisiertes Papier aufgelegt und zu einer Karte von 60mm x 200 mm geschnitten. Zwei dieser Einzelkarten mit je 6 Streifen werden in eine Faltschachtel verpackt.

### Beispiel 3:

844,49 g Glukosesirup werden in einen beheizbaren Behälter eingewogen. Eine Wirkstofflösung aus 36,5 g Acetamiprid und 73 g N-Octyl-Pyrrolidon wird unter Rühren in den Glukosesirup gegeben und ca. 30 Minuten lang bei 40 °C verrührt. Danach werden nacheinander 1,7 g einer 5%-igen wässrigen Bitrex-Lösung, 2,5 g Dehyton und 41,5 g Primellose zugegeben und die Mischung so lange gerührt (ca.30 Minuten), bis eine homogen erscheinende Suspension entstanden ist.

Diese Masse wird ca. 120 µm dick mittel eines Streichkastens auf einen PET/Karton/PET-Verbund, der zuvor rückseitig mit einem doppelseitig klebenden Fixierband mit Schutzabdeckung versehen wurde, aufgetragen. Nach dem Entfernen des Wassers durch Trocknen bei erhöhter Temperatur besitzt die nun entstandene wirkstoffhaltige Köderschicht (1) ein Flächengewicht von 100 g/m². Der Karton-Ködermasse-Verbund wird mit einem einseitig silikonisierten Papier abgedeckt und anschließend an drei Stellen mit Querfalzen versehen, so dass für den Anwender deutlich sichtbare Knickvorgaben entstehen. Der Verbund wird nach 200 mm quer geschnitten und die so entstehenden Dreiecksköder (z.B. 65 mm x 200 mm) in Schlauchbeutel verpackt.

Der Endverbraucher besitzt nun die Möglichkeit, vor der Anwendung des Erzeugnisses den Verbund an den Querfalzen zu knicken. Dazu muss der Anwender zunächst die Schutzfolie vom "Fixierkleber" (3) entfernen. Das durch das Knicken entstandene Dreieck wird mittels des Fixierbands zusammengeklebt und bildet nun eine aufstellbare Falle.

### Beschreibung der Abbildungen:

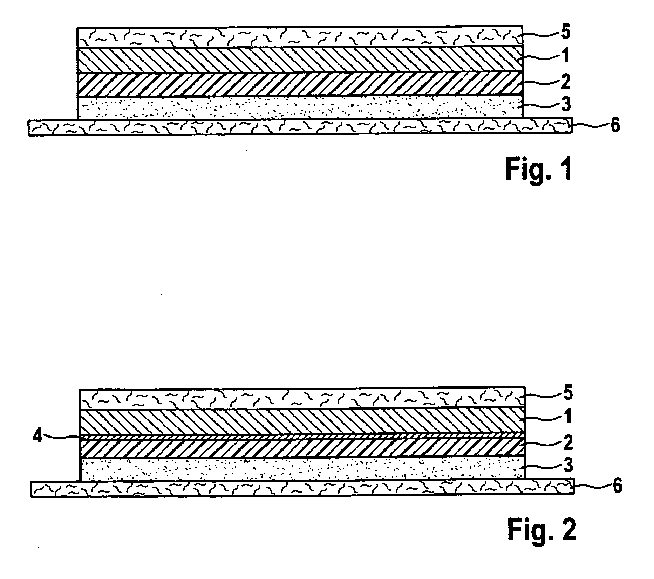

Figur 1 zeigt den schematischen Aufbau eines Erzeugnisses im Querschnitt.
Figur 2 zeigt den schematischen Aufbau des Erzeugnisses im Querschnitt, wobei zusätzlich zwischen der wirkstoffhaltigen Köderschicht (1) und der Trägerfolie (2) eine Ankerschicht (4) enthalten ist.

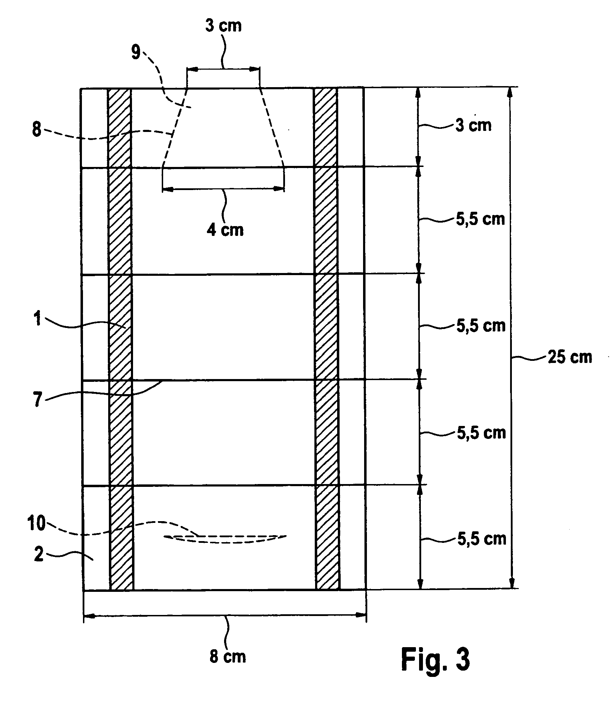

Figur 3 zeigt das Erzeugnis in Form einer Trägerfolie, die die wirkstoffhaltige Köderschicht (2) in Form von zwei Längsstreifen aufweist und mit Schnittlinien (8) und Falzlinien (7) versehen ist. Das Knicken entlang der Falzlinien (7) ermöglicht es, die Lasche (9) in die Schnittlinie (10) einzustecken und so aus der Trägerfolie (2) eine aufstellbare Falle herzustellen.

### Bezugszeichenliste:

In den Abbildungen haben die Nummern folgende Bedeutung:
1 = wirkstoffhaltige Köderschicht
2 = Trägerfolie
3 = Kleberschicht
4 = Ankerschicht
5 = Schutzpapier
6 = Schutzpapier
7 = Falzlinie
8 = Schnittlinien

## Patentansprüche

1. Erzeugnis zum Anlocken und Töten von Insekten, welches eine wirkstoffhaltige Köderschicht (1) und eine Trägerfolie (2) aufweist, **dadurch gekennzeichnet, dass** die wirkstoffhaltige Köderschicht (1)
i. mindestens 30 Gew.-% eines Köderstoffs,
ii. mindestens 0,1 Gew.-% eines Insektizids und
iii. mindestens 0,1 bis maximal 10 Gew.-% eines Supersprengmittels, das Carboxymethylcellulose und/oder Carboxymethylstärke oder quervernetztes Polyvinylpyrrolidon ist,
enthält.

2. Erzeugnis nach Anspruch 1, **dadurch gekennzeichnet, dass** der Köderstoff ein Zucker ist, vorzugsweise ein Monosaccharid, insbesondere L-Arabinose, D-Xylose, D-Ribulose, D-Glucose, D-Mannose, D-Galaktose, D-Glucuronsäure, Glucuronat, D-Galacturonsäure, Galacturonat, N-Acetyl-D-glucosamin, D-Glucosamin, N-Acetyl-D-galactosamin, D-Fucose, L-Fucose, L-Rhamnose, D-Chinovose und D-Fructose, ein Disaccharid, insbesondere Maltose, Cellobiose, Isomaltose, Isomaltulose, Gentiobiose, Trehalose, Saccharose, Lactose und Laminaribiose, eine Mischung, die ein Mono- und/oder ein Disaccharid enthält, insbesondere Ahornsaft, Ahornsirup, Backhonig, Blütenhonig, Glucosesirup, Honig, Honigtauhonig, Industriehonig, Invertzucker, Invertzuckersirup, Isoglucose, Isomeratzucker, Maissirup, Maltosesirup, Rübensirup, Stärkesirup, Zuckerrübensirup und Waldhonig, oder ein Zuckeralkohol, insbesondere Xylitol, D-Glucitol, D-Mannitol, Maltitol, Isomalt und Lactilol oder eine Kombination von mindestens zwei dieser Zucker.

3. Erzeugnis nach einem oder mehreren der Ansprüche 1 bis 2, **dadurch gekennzeichnet, dass** die Konzentration des Köderstoffs in der wirkstoffhaltigen Köderschicht (1) bis zu 99,5 Gew.-% beträgt und vorzugsweise zwischen 50 und 95 Gew.-% und besonders bevorzugt zwischen 70 und 90 Gew.-% liegt.

4. Erzeugnis nach einem oder mehreren der Ansprüche 1 bis 3, **dadurch gekennzeichnet, dass** das Insektizid aus der Gruppe bestehend aus Pyrethrum, Organophosphor-Insektiziden, Carbamaten, Pyrethroiden, Phenylpyrazolen, Neonicotinoiden und Biopestiziden ausgewählt ist.

5. Erzeugnis nach einem oder mehreren der Ansprüche 1 bis 4, **dadurch gekennzeichnet, dass** das Insektizid aus der Gruppe bestehend aus Abamectin, Acetamiprid, alpha-Cypermethrin, Azadirachtin (Neem), Azamethiphos, beta-Cyfluthrin, Bifenazate, Bifenthrin, Buprofezin, Chlorantraniliprol, Chlorfenapyr, Chlorpyrifos, Clothianidin, Deltamethrin, Diflubenzuron, Dinotefuran, Dimethoat, Esfenvalerat, Etofenprox, Fenoxycarb, Fenpyroximat, Flonicamid, Flubendiamid, Flufenoxuron, Imidacloprid, Imiprothrin, Indoxacarb, Kali-Seife, Kieselgur, lambda-Cyhalothrin, Lithiumperfluoroctansulfonat, Magnesiumphosphid, Metaflumizone, Methoxyfenozide, Metofluthrin, Milbemectin, Mineralöle, n-Methylneodecanamid, Nicarbazin, Novaluron, Pirimicarb, Pirimiphos-methyl, Pymetrozin, Pyrethrine, Pyridalyl, Rapsöl, Spinosad, Spirodiclofen, Sulfurylfluorid, Tebufenozid, Tefluthrin, Thiacloprid, Thiamethoxam, zeta-Cypermethrin, Bacillus thuringiensis subspecies, mexikanischer Cydia pomonella Granulovirus und Kombinationen aus Abamectin + Thiamethoxam, Azamethiphos + Fipronil, beta-Cyfluthrin + Clothianidin, beta-Cyfluthrin + Imidacloprid, Cyfluthrin + Codlemone, Fludioxonil + Metalaxyl-M + Thiamethoxam, Fuberidazol + Imazalil + Triadimenol + Imidacloprid, Methiocarb + Imidacloprid, Pencycuron + Imidacloprid, Pyrethrine + Abamectin, Pyrethrine + Rapsöl sowie Tefluthrin + Imidacloprid ausgewählt ist.

6. Erzeugnis nach einem oder mehreren der Ansprüche 1 bis 5, **dadurch gekennzeichnet, dass** als Insektizid Acetamiprid, Azamethiphos, Ethofenprox, Fipronil, Imidacloprid, mindestens ein Pyrethroid, Thiacloprid oder die Kombination von Azamethiphos und Fipronil verwendet wird.

7. Erzeugnis nach einem oder mehreren der Ansprüche 1 bis 6, **dadurch gekennzeichnet, dass** das Supersprengmittel in der wirkstoffhaltigen Köderschicht (1) in einer Konzentration zwischen 0,5 und 5 Gew.-% und vorzugsweise in einer Konzentration zwischen 1 und 2 Gew.-% enthalten ist.

8. Erzeugnis nach einem oder mehreren der Ansprüche 1 bis 7, **dadurch gekennzeichnet, dass** die wirkstoffhaltige Köderschicht (1) mindestens ein Tensid aus der Gruppe der anionischen, kationischen, nichtionischen oder amphoteren Detergenzien enthält, wobei als anionische Detergenzien sulfonierte und sulfatierte Alkyl-, Arylalkyl- und Alkylarylverbindungen, Alkylsuccinate, Alkylsulfosuccinate, N-Alkoylsarcosinate, vorzugsweise Natrium-, Magnesium-, Ammonium- und Mono-, Di- und Triethanolaminsalze von Alkyl-, Arylalkylsulfaten und Alkylarylsulfonaten, wobei die Alkylgruppen 12 bis 21 Kohlenstoffatomen aufweisen und ungesättigt, vorzugsweise aber gesättigt sind, sowie Alkylethersulfate mit 1 bis 10 Ethylenoxid- oder Propylenoxideinheiten pro Molekül in Frage kommen, insbesondere Natriumlaurylsulfat, Natriumlaurylethersulfat, Ammoniumlaurylsulfat, Triethanolaminlaurylsulfat, Natrium-(C₁₄₋₁₆)-Olefinsulfonate, Natriummyristylethersulfat, Ammoniumlaurylethersulfat, Dinatriumlaurylsulfosuccinat, Ammoniumlaurylsulfosuccinat, Natriumdodecylbenzylsulfonat, Natriumcocoylisothionat, Natrium-N-Lauroylsarcosinat und besonders bevorzugt Natrium-Cocoamphoacetat, als kationische Detergenzien monoquaternäre oder bisquaternäre Ammoniumverbindungen, die mindestens einen aliphatischen Rest mit 10 bis 26 Kohlenstoffatomen tragen, der eine Esterbindung oder eine Amidbindung enthalten. kann, in Frage kommen, insbesondere Hexadecylmethylammoniumchlorid, als nicht-ionische Detergenzien Kondensationsprodukte aus Ethylenoxid oder Propylenoxid mit einem langkettigen Alkohol, einem langkettigen Amin oder einer langkettigen Carbonsäure in Frage kommen, wobei die Kohlenstoffkette 8 bis 20 Kohlenstoffatome umfasst und mit 5 bis 20 Ethylenoxid- oder Propylenoxideinheiten kondensiert ist, sowie Alkylpolyglykoside mit 8 bis 14 Kohlenstoffatomen in der Alkylkette, und als amphotere Detergenzien Betaine, insbesondere Cocosdimethyl-carboxymethylbetain, Lauryldimethylcarboxymethylbetain, Lauryldimethyl-α-carboxyethylbetain, Cetyldimethyl-carboxymethylbetain, Sulfobetaine, insbesondere Cocosdimethyl-sulfodimethylbetain, Amidobetaine, insbesondere Cocosamidopropylbetain, Laurylamidopropylbetain, Myristylamidopropylbetain und Amidosulfobetaine.

9. Erzeugnis nach einem oder mehreren der Ansprüche 1 bis 8, **dadurch gekennzeichnet, dass** die wirkstoffhaltige Köderschicht (1) ein Flächengewicht zwischen 10 und 250 g/m², vorzugsweise zwischen 20 und 50 g/m² aufweist.

10. Erzeugnis nach einem oder mehreren der Ansprüche 1 bis 9, **dadurch gekennzeichnet, dass** die Konzentration des Insektizids in der wirkstoffhaltigen Schicht (1) zwischen 0,1 und 25 Gew.-% liegt, vorzugsweise zwischen 0,5 und 10 Gew.-%.

11. Erzeugnis nach einem oder mehreren der Ansprüche 1 bis 10, **dadurch gekennzeichnet, dass** die Konzentration des Tensids in der wirkstoffhaltigen Köderschicht (1) maximal 5 Gew.-% beträgt, vorzugsweise weniger als 2 Gew.-% und besonders bevorzugt zwischen 0,1 bis 0,5 Gew.-%.

12. Erzeugnis nach einem oder mehreren der Ansprüche 1 bis 11, **dadurch gekennzeichnet, dass** es zwischen der wirkstoffhaltigen Köderschicht (1) und der Trägerschicht (2) eine Ankerschicht (4) aufweist..

13. Erzeugnis nach einem oder mehreren der Ansprüche 1 bis 12, **dadurch gekennzeichnet, dass** die Ankerschicht (4) eine Dicke bis zu 25 µm besitzt und vorzugsweise regelmäßig angeordnete quadratische Aussparungen von 0,5 bis 3 mm, vorzugsweise 0,8 bis 2 mm und besonders bevorzugt 1 mm Kantenlänge aufweist.

14. Erzeugnis nach einem oder mehreren der Ansprüche 1 bis 13, **dadurch gekennzeichnet, dass** die wirkstoffhaltige Köderschicht (1) in Form einer durchgehenden Schicht, einer nicht-durchgehenden Schicht, vorzugsweise in Form von Punkten oder Streifen, oder als fester Schaum vorliegt.

15. Erzeugnis nach einem oder mehreren der Ansprüche 1 bis 14, **dadurch gekennzeichnet, dass** die wirkstoffhaltige Köderschicht (1) mindestens einen Hilfsstoff aus der Gruppe der Lösungsmittel für das Insektizid und/oder den Köderstoff, wobei aliphatische Kohlenwasserstoffe, aromatische Kohlenwasserstoffe, hydroaromatische Kohlenwasserstoffe, Terpenkohlenwasserstoffe, Alkohole, Ester, Ether, Glykolether, Ketone, Chlorkohlenwasserstoffe, Aldehyde, Acetale, aliphatische gesättigte Monocarbonsäuren, natürliche und synthetische Polymere in Frage kommen, vorzugsweise 1- Octanol, 1-Decanol, Aceton, Acetophenon, Benzylalkohol, Butyrolacton, Hexyllaurat, PEG-60 Corn Glyceride, Citrus-Terpene, Dimethylformamid, Dimethylsulfoxid, Essigsäure, Ethanol, Ethylacetat, Ethylenglycol, Eucalyptol, Glycerin, Isopropylmyristat, Methylethylketon, Morpholin, Lavendel/Citronellagemische, Myrcene, Neodekansäure, N-Methyl-2-pyrrolidon, N-Octyl-pyrrolidon, Ölsäure, PEG 400 und Tributylphosphat, der Lockstoffe, wobei insbesondere die von Insekten selbst produzierten Sexualpheromone und Aggregationspheromone in Frage kommen, vorzugsweise Anastrephin, Bombykol, Brevicomin, Chalcogran, Cucujolide, Disparlur, Dominicalure, Epoxypolyene, Ferrulacton, Frontalin, Grandisol, Hepialon, Ipsdienol, Lardolure, Lineatin, Matsuon, Muscalur, Multistriatin, Olean, Periplanone, Pityol, Quadrilur, Rhynchophorol, Serricornin, Stegobinon, Sulcatol und Verbenol, der Bitterstoffe, der Bindemittel, der UV-Absorber, der pH-Puffer, der Salze, der Alterungsschutzmittel (Antioxidantien und Antiozonantien), der Füllstoffe, der Weichmacher, der Geruchsverbesserungsmittel, der Sauerstoff-Entferner, der Antistatika, der Stabilisatoren, der Trennmittel, der Gleitmittel, der Flammschutzmittel, der Mikrobizide, der Viskositätsverbesserer, der Dispergiermittel, der optischen Aufheller, der Farbstoffe und der Geschmacksstoffe enthält.

## Claims

1. Product for attracting and destroying insects, which product has an active-substance-comprising bait layer (1) and a backing film (2), **characterized in that** the active-substance-comprising bait layer (1) comprises
i. at least 30% by weight of a bait substance,
ii. at least 0.1% by weight of an insecticide and
iii. at least 0.1 to no more than 10% by weight of a superdisintegrant which is carboxymethylcellulose and/or carboxymethyl starch or crosslinked polyvinylpyrrolidone.

2. Product according to Claim 1, **characterized in that** the bait substance is a sugar, preferably a monosaccharide, in particular L-arabinose, D-xylose, D-ribulose, D-glucose, D-mannose, D-galactose, D-glucuronic acid, glucuronate D-galacturonic acid, N-acetyl-D-glucosamine, D-glucosamine, N-acetyl-D-galactosamine, D-fucose, L-fucose, L-rhamnose, D-chinovose and D-fructose, a disaccharide, in particular maltose, cellobiose, isomaltose, isomaltulose, gentiobiose, trehalose, sucrose, lactose and laminaribiose, a mixture comprising a mono- and/or a disaccharide, in particular maple sap, maple syrup, baker's honey, blossom honey, glucose syrup, honey, honeydew honey, industrial honey, invert sugar, invert syrup, isoglucose, isomerate sugar, maize syrup, maltose syrup, treacle, corn syrup, molasses, and forest honey, or a sugar alcohol, in particular xylitol, D-glucitol, D-mannitol, maltitol, isomalt and lactitol, or a combination of at least two of these sugars.

3. Product according to one or more of Claims 1 to 2, **characterized in that** the concentration of the bait substance in the active-substance-comprising bait layer (1) is up to 99.5% by weight and preferably between 50 and 95% by weight and especially preferably between 70 and 90% by weight.

4. Product according to one or more of Claims 1 to 3, **characterized in that** the insecticide is selected from the group consisting of pyrethrum, organophosphorous insecticides, carbamates, pyrethroids, phenylpyrazoles, neonicotinoids and biopesticides.

5. Product according to one or more of Claims 1 to 4, **characterized in that** the insecticide is selected from the group consisting of abamectin, acetamiprid, alpha-cypermethrin, azadirachtin (neem), azamethiphos, beta-cyfluthrin, bifenazate, bifenthrin, buprofezin, chloranthraniliprole, chlorfenapyr, chlorpyrifos, clothianidin, deltamethrin, diflubenzuron, dinotefuran, dimethoate, esfenvalerate, etofenprox, fenoxycarb, fenpyroximate, flonicamid, flubendiamid, flufenoxuron, imidacloprid, imiprothrin, indoxacarb, potash soap, kieselguhr, lambda-cyhalothrin, lithium perfluoroctanesulphonate, magnesium phosphide, metaflumizone, methoxyfenozide, metofluthrin, milbemectin, mineral oils, N-methylneodecanamide, nicarbazin, novaluron, pirimicarb, pirimiphos-methyl, pymetrozine, pyrethrins, pyridalyl, rapeseed oil, spinosad, spirodiclofen, sulphuryl fluoride, tebufenozide, tefluthrin, thiacloprid, thiamethoxam, zeta-cypermethrin, Bacillus thuringiensis subspecies, Mexican Cydia pomonella granulovirus, and combinations of abamectin + thiamethoxam, azamethiphos + fipronil, beta-cyfluthrin + clothianidin, beta-cyfluthrin + imidacloprid, cyfluthrin + codlemone, fludioxonil + metalaxyl-M + thiamethoxam, fuberidazole + imazalil + triadimenol + imidacloprid, methiocarb + imidacloprid, pencycuron + imidacloprid, pyrethrins + abamectin, pyrethrins + rapeseed oil and tefluthrin + imidacloprid.

6. Product according to one or more of Claims 1 to 5, **characterized in that** the insecticide used is acetamiprid, azamethiphos, ethofenprox, fipronil, imidacloprid, at least one pyrethroid, thiacloprid or the combination of azamethiphos and fipronil.

7. Product according to one or more of Claims 1 to 6, **characterized in that** the superdisintegrant in the active-substance-comprising bait layer (1) is present in a concentration of between 0.5 and 5% by weight and preferably in a concentration of between 1 and 2% by weight.

8. Product according to one or more of Claims 1 to 7, **characterized in that** the active-substance-comprising bait layer (1) comprises at least one surfactant from the group of the anionic, cationic, nonionic or amphoteric detergents, with suitable anionic detergents being sulphonated and sulphated alkyl, arylalkyl and alkylaryl compounds, alkylsuccinates, alkylsulphosuccinates and N-alkoylsarcosinates, preferably sodium salts, magnesium salts, ammonium salts and the mono-, di- and triethanolamine salts of alkyl sulphates, arylalkyl sulphates and alkylarylsulphonates, where the alkyl groups have 12 to 21 carbon atoms and are unsaturated, but preferably saturated, and alkylether sulphates having 1 to 10 ethylene oxide or propylene oxide units per molecule, in particular sodium lauryl sulphate, sodium lauryl ether sulphate, ammonium lauryl sulphate, triethanolamine lauryl sulphate, sodium (C₁₄-₁₆) - olefinsulphonates, sodium myristyl ether sulphate, ammonium lauryl ether sulphate, disodium lauryl sulphosuccinate, ammonium lauryl sulphosuccinate, sodium dodecylbenzyl sulphonate, sodium cocoylisethionate, sodium N-lauroylsarcosinate, and especially preferably sodium cocoamphoacetate, cationic detergents which may be used being monoquaternary or bisquaternary ammonium compounds which have attached to them at least one aliphatic radical which has 10 to 26 carbon atoms and which may comprise an ester bond or an amide bond, in particular hexadecylmethylammonium chloride, suitable nonionic detergents being condensates of ethylene oxide or propylene oxide and a long-chain alcohol, a long-chain amine or a long-chain carboxylic acid, where the hydrocarbon chain comprises 8 to 20 carbon atoms and is condensed with 5 to 20 ethylene oxide or propylene oxide units, and alkylpolyglycosides having 8 to 14 carbon atoms in the alkyl chain, and suitable amphoteric detergents being betaines, in particular cocodimethylcarboxymethylbetaine, lauryldimethylcarboxymethylbetaine, lauryldimethyl-α-carboxyethylbetaine, cetyldimethylcarboxymethylbetaine, sulphobetaines, in particular cocodimethylsulphodimethylbetaine, amidobetaines, in particular cocoamidopropylbetaine, laurylamidopropylbetaine, myristylamidopropylbetaine and amidosulphobetaines.

9. Product according to one or more of Claims 1 to 8, **characterized in that** the active-substance-comprising bait layer (1) has an areal weight of between 10 and 250 g/m², preferably between 20 and 50 g/m².

10. Product according to one or more of Claims 1 to 9, **characterized in that** the concentration of the insecticide in the active-substance-comprising bait layer (1) is between 0.1 and 25% by weight, preferably between 0.5 and 10% by weight.

11. Product according to one or more of Claims 1 to 10, **characterized in that** the concentration of the surfactant in the active-substance-comprising bait layer (1) amounts to no more than 5% by weight, preferably less than 2% by weight and especially preferably between 0.1 and 0.5% by weight.

12. Product according to one or more of Claims 1 to 11, **characterized in that** it has an anchoring layer (4) between the active-substance-comprising bait layer (1) and the backing layer (2).

13. Product according to one or more of Claims 1 to 12, **characterized in that** the anchoring layer (4) has a thickness of up to 25 µm and features preferably regularly arranged square recesses with an edge length of from 0.5 to 3 mm, preferably from 0.8 to 2 mm and especially preferably 1 mm.

14. Product according to one or more of Claims 1 to 13, **characterized in that** the active-substance-comprising bait layer (1) is present in the form of a continuous layer, a noncontinuous layer, preferably in the form of dots or strips, or as a rigid foam.

15. Product according to one or more of Claims 1 to 14, **characterized in that** the active-substance-comprising bait layer (1) comprises at least one adjuvant from the group of the solvents for the insecticide and/or the bait substance, suitable substances being aliphatic hydrocarbons, aromatic hydrocarbons, hydroaromatic hydrocarbons, terpene hydrocarbons, alcohols, esters, ethers, glycol ethers, ketones, chlorohydrocarbons, aldehydes, acetals, aliphatic saturated monocarboxylic acids, natural and synthetic polymers, preferably 1-octanol, 1-decanol, acetone, acetophenone, benzyl alcohol, butyrolactone, hexyl laurate, PEG-60 corn glycerides, citrus terpenes, dimethylformamide, dimethyl sulphoxide, acetic acid,
ethanol, ethyl acetate, ethylene glycol, eucalyptol, glycerol, isopropyl myristate, methyl ethyl ketone, morpholine, lavender/citronella mixtures, myrcene, neodecanoic acid, N-methyl-2-pyrrolidone, N-octylpyrrolidone, oleic acid, PEG 400 and tributyl phosphate, from the group of the attractants, suitable substances being in particular the sexual pheromones and aggregation pheromones which are produced by the insects themselves, preferably anastrephin, bombycol, brevicomin, chalcogran, cucujolide, disparlure, dominicalure, epoxypolyene, ferrulactone, frontalin, grandisol, hepialon, ipsdienol, lardolure, lineatin, matsuon, muscalure, multistriatin, olean, periplanone, pityol, quadrilure, rhynchophorol, serricornin, stegobinon, sulcatol and verbenol, from the group of the bittering agents, the binders, the UV absorbers, the pH buffers, the salts, the antiageing agents (antioxidants and antiozonants), the fillers, the plasticizers, the odour-masking agents, the deoxidizers, the antistatics, the stabilizers, the separating agents, the glidants, the flame retardants, the microbicides, the viscosity enhancers, the dispersants, the optical brighteners, the colorants and the flavourings.

## Revendications

1. Produit destiné à attirer et tuer des insectes, qui comporte une couche d'appât (1) contenant une substance active et un film de support (2), **caractérisé en ce que** la couche d'appât (1) contenant une substance active contient
i. au moins 30 % en poids d'un appât,
ii. au moins 0,1 % en poids d'un insecticide et
iii. au moins 0,1 à au maximum 10 % en poids d'un superdésintégrant qui est la carboxyméthyl-cellulose et/ou le carboxyméthylamidon ou la polyvinylpyrrolidone à liaisons par ponts.

2. Produit selon la revendication 1, **caractérisé en ce que** l'appât est un sucre, de préférence un monosaccharide, en particulier le L-arabinose, le D-xylose, le D-ribulose, le D-glucose, le D-mannose, le D-galactose, l'acide D-glucuronique, un glucuronate, l'acide D-galacturonique, un galacturonate, la N-acétyl-D-glucosamine, la D-glucosamine, la N-acétyl-D-galactosamine, le D-fucose, le L-fucose, le L-rhamnose, le D-quinovose et le D-fructose, un disaccharide, en particulier le maltose, le cellobiose, l'isomaltose, l'isomaltulose, le gentiobiose, le tréhalose, le saccharose, le lactose et le laminaribiose, un mélange qui contient un mono- et/ou un disaccharide, en particulier le jus d'érable, le sirop d'érable, le miel de boulangerie, le miel de fleurs, le sirop de glucose, le miel, le miel de miellée, le miel industriel, le sucre inverti, le sirop de sucre inverti, le sucre isomérat, le sirop de maïs, le sirop de maltose, le sirop de betterave, le sirop d'amidon, le sirop de betterave sucrière et le miel de forêt, ou un alcool glucidique, en particulier le xylitol, le D-glucitol, le D-mannitol, le maltitol, l'isomalt et le lactitol ou une association d'au moins deux de ces sucres.

3. Produit selon une ou plusieurs des revendications 1 et 2, **caractérisé en ce que** la concentration de l'appât dans la couche d'appât (1) contenant une substance active vaut jusqu'à 99,5 % en poids et est comprise de préférence entre 50 et 95 % en poids et de façon particulièrement préférée entre 70 et 90 % en poids.

4. Produit selon une ou plusieurs des revendications 1 à 3, **caractérisé en ce que** l'insecticide est choisi dans le groupe constitué par le pyrèthre, des insecticides organophosphorés, des carbamates, des pyréthroïdes, des phénylpyrazoles, des néonicotinoïdes et des biopesticides.

5. Produit selon une ou plusieurs des revendications 1 à 4, **caractérisé en ce que** l'insecticide est choisi dans le groupe constitué par l'abamectine, l'acétamipride, l'alpha-cyperméthrine, l'azadirachtine (Neem), l'azaméthiphos, la bêta-cyfluthrine, le bifénazate, la bifenthrine, la buprofézine, le chlorantraniliprol, le chlorfénapyr, le chlorpyrifos, la clothianidine, la deltaméthrine, le diflubenzuron, le dinotéfurane, le diméthoate, l'esfenvalérate, l'étofenprox, le fénoxycarbe, le fenpyroximate, le flonicamide, le flubendiamide, le flufénoxuron, l'imidaclopride, l'imiprothrine, l'indoxacarbe, le savon potassique, le kieselguhr, la lambda-cyhalothrine, le perfluoro-octanesulfonate de lithium, le phosphure de magnésium, la métaflumizone, le méthoxyfénozide, la métofluthrine, la milbémectine, des huiles minérales, le N-méthylnéodécanamide, la nicarbazine, le novaluron, le pirimicarbe, le pirimiphos-méthyle, la pymétrozine, les pyréthrines, le pyridalyl, l'huile de colza, le spinosad, le spirodiclofène, le fluorure de sulfuryle, le tébufénozide, la téfluthrine, le thiaclopride, le thiaméthoxame, la zêta-cyperméthrine, des sous-espèces de *Bacillus thuringiensis,* le granulovirus de *Cydia pomonella* du Mexique et des associations d'abamectine + thiaméthoxame, azaméthiphos + fipronil, bêta-cyfluthrine + clothianidine, bêta-cyfluthrine + imidaclopride, cyfluthrine + codlémone, fludioxonil + métalaxyl-M + thiaméthoxame, fubéridazole + imazalil + triadiménol + imidaclopride, méthiocarbe + imidaclopride, pencycuron + imidaclopride, pyréthrine + abamectine, pyréthrines + huile de colza ainsi que téfluthrine + imidaclopride.

6. Produit selon une ou plusieurs des revendications 1 à 5, **caractérisé en ce qu'**on utilise comme insecticide l'acétamipride, l'azaméthiphos, l'éthofenprox, le fipronil, l'imidaclopride, au moins un pyréthroïde, le thiaclopride ou l'association d'azaméthiphos et de fipronil.

7. Produit selon une ou plusieurs des revendications 1 à 6, **caractérisé en ce que** dans la couche d'appât (1) contenant une substance active le désintégrant est contenu à une concentration comprise entre 0,5 et 5 % en poids et de préférence à une concentration comprise entre 1 et 2 %.

8. Produit selon une ou plusieurs des revendications 1 à 7, **caractérisé en ce que** la couche d'appât (1) contenant une substance active contient au moins un tensioactif choisi dans le groupe des détergents anioniques, cationiques, non ioniques ou amphotères, en tant que détergents anioniques étant pris en considération des composés alkyliques, arylalkyliques et alkylaryliques sulfonés et sulfatés, des alkylsuccinates, alkylsulfosuccinates, N-alcoylsarcosinates, de préférence des sels de sodium, de magnésium, d'ammonium et de mono-, di- et triéthanolamine d'alkyl-, arylalkylsulfates et alkylarylsulfonates, les groupes alkyle ayant de 12 à 21 atomes de carbone et étant insaturés, mais de préférence saturés, ainsi que des alkyléthersulfates comportant de 1 à 10 unités oxyde d'éthylène ou oxyde de propylène par molécule, en particulier le laurylsulfate de sodium, le lauryléthersulfate de sodium, le laurylsulfate d'ammonium, le laurylsulfate de triéthanolamine, des oléfine(C₁₄-C₁₆) sulfonates de sodium, le myristyléthersulfate de sodium, le lauryléthersulfate d'ammonium, le laurylsulfosuccinate disodique, le laurylsulfosuccinate d'ammonium, le dodécylbenzylsulfonate de sodium, le cocoylisothionate de sodium, le N-lauroylsarcosinate de sodium et de façon particulièrement préférée le cocoamphoacétate de sodium, en tant que détergents cationiques étant pris en considération des composés d'ammonium monoquaternaire ou bisquaternaire, qui portent au moins un radical aliphatiques ayant de 10 à 26 atomes de carbone, qui peut comporter une liaison ester ou une liaison amide, en particulier le chlorure d'hexadécylméthylammonium, en tant que détergents non ioniques étant pris en considération des produits de condensation d'oxyde d'éthylène ou d'oxyde de propylène avec un alcool à longue chaîne, une amine à longue chaîne ou un acide carboxylique à longue chaîne, la chaîne carbonée comprenant de 8 à 20 atomes de carbone et étant condensée avec 5 à 20 unités oxyde d'éthylène ou oxyde de propylène, ainsi que des alkylpolyglycosides ayant de 8 à 14 atomes de carbone dans la chaîne alkyle, et en tant que détergents amphotères étant prises en considération des bétaïnes, en particulier la coco-diméthyl-carboxyméthylbétaïne, la lauryldiméthylcarboxyméthylbétaïne, la lauryl-diméthyl-α-carboxyéthylbétaïne, la cétyldiméthyl-carboxyméthylbétaïne, des sulfobétaïnes, en particulier la coco-diméthyl-sulfodiméthylbétaïne, des amido-bétaïnes, en particulier la cocosamidopropylbétaïne, la laurylamidopropylbétaïne, la myristylamidopropylbétaïne et des amidosulfobétaïnes.

9. Produit selon une ou plusieurs des revendications 1 à 8, **caractérisé en ce que** la couche d'appât (1) contenant une substance active présente un poids par unité de surface compris entre 10 et 250 g/m², de préférence entre 20 et 50 g/m².

10. Produit selon une ou plusieurs des revendications 1 à 9, **caractérisé en ce que** la concentration de l'insecticide dans la couche (1) contenant une substance active est comprise entre 0,1 et 25 % en poids, de préférence entre 0,5 et 10 % en poids.

11. Produit selon une ou plusieurs des revendications 1 à 10, **caractérisé en ce que** la concentration de l'insecticide dans la couche d'appât (1) contenant une substance active est au maximum de 5 % en poids, de préférence inférieure à 2 % en poids et de façon particulièrement préférée comprise entre 0,1 et 0,5 % en poids.

12. Produit selon une ou plusieurs des revendications 1 à 11, **caractérisé en ce qu'**il présente une couche d'ancrage (4) entre la couche d'appât (1) contenant une substance active et la couche de support (2).

13. Produit selon une ou plusieurs des revendications 1 à 12, **caractérisé en ce que** la couche d'ancrage (4) a une épaisseur allant jusqu'à 25 µm et présente de préférence des évidements carrés de 0,5 à 3 mm, de préférence de 0,8 à 2 mm et de façon particulièrement préférée de 1 mm de côté, disposés régulièrement.

14. Produit selon une ou plusieurs des revendications 1 à 13, **caractérisé en ce que** la couche d'appât (1) contenant une substance active se trouve sous forme d'une couche continue, d'une couche discontinue, de préférence sous forme de points ou de bandes, ou sous forme de mousse solide.

15. Produit selon une ou plusieurs des revendications 1 à 14, **caractérisé en ce que** la couche d'appât (1) contenant une substance active contient au moins un adjuvant choisi dans le groupe des solvants pour l'insecticide et/ou l'appât, des hydrocarbures aliphatiques, des hydrocarbures aromatiques, des hydrocarbures hydroaromatiques, des hydrocarbures terpéniques, des alcools, des esters, des éthers, des éthers de glycol, des cétones, des hydrocarbures chlorés, des aldéhydes, des acétals, des acides monocarboxyliques aliphatiques saturés, des polymères naturels et synthétiques étant pris en considération, de préférence le 1-octanol, le 1-décanol, l'acétone, l'acétophénone, l'alcool benzylique, la butyrolactone, le laurate d'hexyle, des PEG-60-glycérides de grains, des terpènes d'agrumes, le diméthylformamide, le diméthylsulfoxyde, l'acide acétique, l'éthanol, l'acétate d'éthyle, l'éthylèneglycol, l'eucalyptol, le glycérol, le myristate d'isopropyle, la méthyléthylcétone, la morpholine, des mélanges de lavande/citronella, les myrcènes, l'acide néodécanoïque, la N-méthyl-2-pyrrolidone, la N-octylpyrrolidone, l'acide oléique, le PEG 400 et le phosphate de tributyle, des agents d'attraction, en particulier les phéromones sexuelles et les phéromones d'agrégation, produites par les insectes eux-mêmes, étant prises en considération, de préférence l'anastréphine, le bombykol, la brévicomine, le chalcogran, les cucujolides, le disparlur, le dominicalure, l'époxypolyène, la ferrulactone, la frontaline, le grandisol, l'hépialon, l'ipsdiénol, le lardolure, la linéatine, le matsuon, le muscalur, la multistriatine, l'oléan, la périplanone, le pityol, le quadrilur, le rhynchophorol, la serricornine, la stégobinone, le sulcatol et le verbénol, des substances amères, des liants, des absorbeurs UV, des tampons de pH, des sels, des agents antivieillissement (antioxydants et antiozones), des charges, der plastifiants, des agents améliorant l'odeur, der agents éliminant l'oxygène, des antistatiques, des stabilisants, der agents de séparation, des lubrifiants, des agents ignifuges, des microbicides, des agents améliorant la viscosité, des dispersants, des azurants optiques, des colorants et der agents de sapidité.
